# EUROPÄISCHE PATENTSCHRIFT

(11) **EP 1 499 195 B1**
(45) Veröffentlichungstag und Bekanntmachung des Hinweises auf die Patenterteilung: **16.11.2005**
(21) Anmeldenummer: 03711998.9
(22) Anmeldetag: 13.03.2003
(51) Int. Cl.: A21B 3/15, A47J 37/01

(54) **BEHÄLTER MIT BODENWÖLBUNG ZUR AUFNAHME VON GARGUT**
CONTAINER COMPRISING AN ARCHED BOTTOM FOR RECEIVING COOKING GOODS
CONTENANT POURVU D'UNE COURBURE DE FOND DESTINE A RECEVOIR UN PRODUIT A CUIRE

(30) Priorität: 29.04.2002 DE 10219065
(43) Veröffentlichungstag der Anmeldung: 26.01.2005
(73) Patentinhaber: Rational AG, 86899 Landsberg/Lech (DE)
(72) Erfinder: KRAMER, Gerhard, 86929 Penzing (DE); WALLENWEIN, Katharina, 86899 Landsberg (DE); IMGRAM, Judith, 63456 Hanau (DE); JÜRGENS, Andrea, 81245 München (DE); GREINER, Michael, 85354 Freising (DE); KLOUDA, Jaroslav, 82256 Fürstenfeldbruck (DE); KLASMEIER, Jürgen, 86807 Buchloe (DE)
(74) Vertreter: Weber-Bruls, Dorothée
(86) Internationale Anmeldenummer: PCT/EP2003/002605
(87) Internationale Veröffentlichungsnummer: WO 2003/092387

(56) Entgegenhaltungen:
- DE-U- 29 724 257
- DE-U- 29 905 157
- FR-A- 1 041 050
- US-A- 5 487 330

## Beschreibung

Die vorliegende Erfindung betrifft einen Behälter zur Aufnahme von, insbesondere vorpräpariertem, Gargut, das in einem mit zirkulierender Heißluft und/oder Dampf beaufschlagbaren Garraum zu garen, insbesondere fertig zu garen, ist, mit einem oberen im wesentlichen umlaufenden Rand, einem gegenüber diesem Rand abgesenkten Boden und Seitenwänden.

Zum Fertiggaren von insbesondere vorpräpariertem Gargut, wie vorblanchierten Pommes Frittes, Kroketten, Kartoffelbällchen, Kartoffelkeilen oder dergleichen, werden zur Zeit zum Beispiel Einschübe in Form von granitemaillierten Behältern, CNS-Blechen oder gelochten Aluminium-Platten, beispielsweise in sogenannten Kombi-Öfen, bei denen sowohl mit Heißluft als auch mit Dampf gegart werden kann, verwendet (s.a. "Handbuch ClimaPlus Combi", 04/97, Rational Großküchentechnik GmbH). Diese bekannten Einschübe haben den Nachteil, daß meist nur eine einlagige Schüttung zur Anwendung kommt, um zu gewährleisten, daß das Gargut mit einem möglichst großen Bereich seiner Oberflächen mit Heißluft beim Fertiggaren im direkten Kontakt kommen kann. Zudem besteht bei derartigen Einschüben die Gefahr, daß diejenigen Oberflächen des Garguts, die in direktem Kontakt mit einer Einschubfläche stehen, ähnlich wie Bratkartoffeln "gebraten" werden, wobei sich dieser "Brat-Effekt" durch Abtropfen des Frittierfetts verstärkt.

In der US 4,052,589 A werden stapelbare Tabletts bzw. Einschübe mit mindestens zwei Vertiefungen zur Aufnahme von Gargut beschrieben, und zwar zum parallelen Garen und/oder Kühlen von vorpräparierten Essensportionen.

Die DE 39 36 907 A1 offenbart eine Form zum Garen von Back- oder Bratgut, insbesondere für Geflügel, Fisch und Fleisch, in einem Backofen. Um ein gleichmäßiges Garen zu gewährleisten weist die Form einen Bereich zur Lagerung des Back- oder Bratguts auf, der als Wärmespeicherelement und/oder Hohlkörper ausgebildet ist. Mindestens der Hohlkörper umfaßt mindestens eine in den Hohlkörper einmündende Lufteintrittsöffnung.

Die DE 199 06 181 A1 betrifft eine Ökogrillpfanne aus Alufolie zur Aufnahme von Grillgut, in Form einer Schale mit wellenförmigen Bodenausformungen und sich abwechselnden Tälern und Erhebungen. Durch besondere Ausformungen von Durchlüftungsöflnungen in den Flanken der Erhebungen soll ein Abtropfen von Fett in eine Feuerstelle vermieden, jedoch eine Luftzirkulation erzwungen werden.

In der DE 198 60 009 A1 wird ein Behälter zur Aufnahme von Lebensmitteln beschrieben, der als dreidimensionales Drahtgeflecht ausgeformt ist, das vorzugsweise wellige, kegelförmige, pyramidenförmige oder wellenförmige Unebenheiten aufweist, wodurch zu garende Lebensmittel in einer Vielzahl von unterschiedlichen Stellungen relativ zueinander und/oder dem Drahtgeflecht zu liegen kommen. Auf diese Weise wird insbesondere ein paralleles Anliegen von Lebensmitteln aneinander und/oder an einer Behälterwand vermieden.

In der WO 00/57709 wird ein Ofen beschrieben, mit dem Gargut auf Essens- oder Kochtemperatur gehalten wird. Dieser Ofen hat mehrere Einschübe, in die Behälter zur Aufnahme von Lebensmittel geschoben werden können. Diese Behälter haben jeweils einen flachen Boden.

Gemäß der WO 93/21807 kann ein Frittierkorb mit einem halbkreisförmigen Querschnitt verwendet werden, der drehbar um eine an seiner Oberkante befindlichen Achse in das Frittierfett eingetaucht werden kann, so daß Lebensmittel darin schwimmen. Dieses Gargerät soll besonders leicht zu reinigen sein.

Die DE 297 24 257 U1 beschreibt ein Herdbackblech zum Aufbacken von Baguettes oder dergleichen, bei dem mehrere Bödenmulden zum Einlegen von aufzubackenden Baguettes vorgesehen sind. In diese Bodenmulden können die Baguettes lagegerecht eingelegt werden, so dass sie ihre Lage auch beim Einsetzen des Backblechs in den Backherd nicht verändern können, um beispielsweise bei belegten Baguettes ein Abfließen des Belags auf den Backblechboden zu vermeiden. Die Bodenmulden ermöglichen eine zuverlässige Positionierung und Lagesicherung des Baguettes auf dem Backblech.

Die US 5,487,330 offenbart ein Tacobackblech, das eine wellenartige Struktur aufweist, wobei in die Wellentäler Tacos zum Backen eingelegt werden können. Die Wellenstruktur dient dem Anordnen der Tacos, um ein Füllen und Servieren derselben zu erleichtern.

Der DE 43 01 806 A ist ein Kochgerät zum Garen von Lebensmitteln zu entnehmen, das unter anderem einen in einen trogförmigen Behälter einhängbaren Siebkorb aufweist. Der Siebkorb ist aus einem mit Durchbrüchen versehenen Flachmaterial gefertigt und weist einen trapezförmigen Querschnitt auf. Der Siebkorb ist mit einer Vielzahl von Löchern versehen, wobei die Lochgröße von den zu garenden Lebensmitteln abhängt. Der Siebboden dieses Siebkorbes ist wie bei vielen herkömmlichen Garbehältnissen flach ausgestaltet.

Aufgabe der vorliegenden Erfindung ist es, den gattungsgemäßen Behälter derart weiterzuentwickeln, daß die Nachteile des Stands der Technik überwunden werden, insbesondere ein verbesserter und gleichmäßiger Wärmeeintrag sichergestellt ist, eine Fettanhäufung insbesondere im mittleren Bereich des Behälters vermieden wird und verkürzte Garzeiten bei gleichzeitig hoher Garqualität ermöglicht werden.

Diese Aufgabe wird erfindungsgemäß dadurch gelöst, daß der Boden mindestens eine sich zur Behältermitte kontinuierlich erhöhende Wölbung enthält, und der abgesenkte Bereich zumindest eine sich über die Breite des abgesenkten Bereichs erstreckende Bodenwelle aufweist.

Bevorzugt ist gemäß der Erfindung, daß die Wölbung im Querschnitt, insbesondere in Längs- und/oder Querausdehnung des Behälters, die Form eines Kreis- oder Ellipsenbogenabschnitts oder eines stumpfen Winkels einnimmt.

Ferner wird erfindungsgemäß vorgeschlagen, daß die Wölbung die Form eines Kugelsegments, eines Segments eines abgeflachten Kegels oder einer abgeflachten Pyramide aufweist und insbesondere eine konvexe Form einnimmt.

Erfindungsgemäß können eine Vielzahl von Bodenwellen vorliegen, wobei die Bodenwellen beabstandet, insbesondere im wesentlichen parallel beabstandet angeordnet sind.

In einer weiteren Ausführungsform der Erfindung weist der Behälter im wesentlichen ein dreidimensionales Drahtgeflecht, insbesondere zum Formen des Bodens und/oder der Seitenwände auf.

Erfindungsgemäß wird weiterhin ein Behälter in Form eines nach oben offenen Einschubs mit einem oberen, umlaufenden Rand, für einen Längs- und/oder Quereinschub in Einschubschienen, wie Schienen eines Einhängegestells an Garraumwänden, vorgesehen.

Schließlich kann auch ein Haltegriff an dem Behälter, an der vorzugsweise form- und/oder kraftschlüssig an dem Behälter lösbar anbringbar ist, erfindungsgemäß vorgesehen sein.

Der Erfindung liegt somit die überraschende Erkenntnis zugrunde, daß die Verwendung einer nach innen in Richtung zur Behältermitte ausgefiihrten Wölbung, insbesondere in Verbindung mit Bodenwellen, ein wesentlich verbesserter, nämlich effizienterer und gleichmäßiger, Wärmeeintrag in das Gargut ermöglicht wird, wodurch eine gesteigerte Garqualität bei gleichzeitiger Reduzierung der Garzeit gelingt. Als besonders vorteilhaft hat sich überraschender Weise ebenfalls herausgestellt, daß durch die beschriebene Wölbung des Behälterbodens in der Mitte des Behälters, durch die die Beschickungshöhe in der Mitte wesentlich kleiner ist als in den umliegenden Randbereichen wird, auch im mittleren Bereich des Behälters eine ausreichende Luftzirkulation gewährleistet ist und eine Fettansammlung, wie in herkömmlichen Behältern häufig beobachtet, nicht stattfindet.

Weitere Merkmale und Vorteile der Erfindung ergeben sich aus der nachfolgenden Beschreibung, in der Ausführungsbeispiele der Erfindung anhand von schematischen Zeichnungen im einzelnen erläutert werden. Dabei zeigt:
- Figur 1: eine Seitenansicht der Längsseite eines erfindungsgemäßen Behälters; und
- Figur 2: eine Draufsicht auf einen erfindungsgemäßen Behälter.

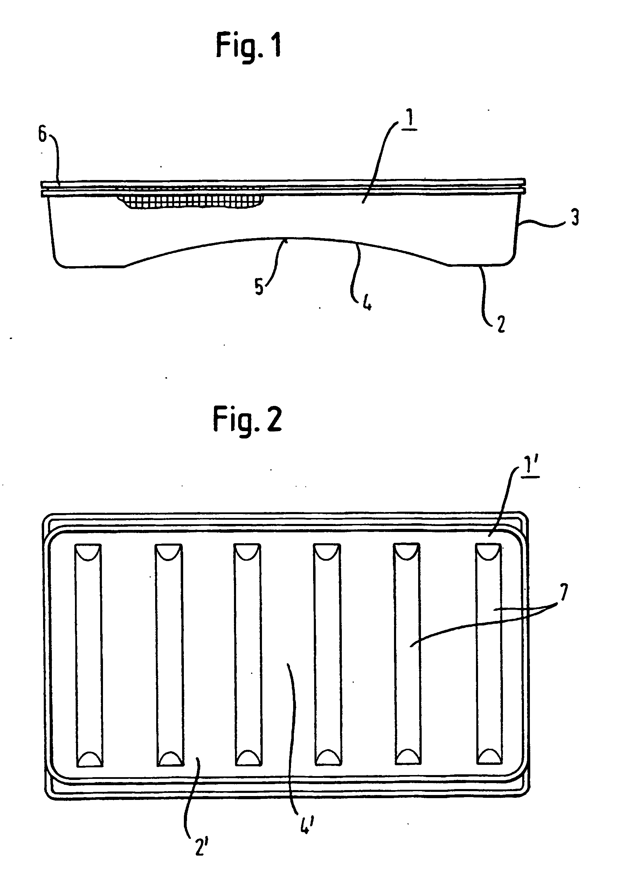

Die in Figur 1 gezeigte erfindungsgemäße Ausführungsform eines Behälters 1 zur Aufnahme von, insbesondere fertig, zu garenden Lebensmitteln, wie vorblanchierten, tiefgefrorenen Pommes Frittes, Kroketten, Kartoffelbällchen, Kartoffelkeilen oder dergleichen, ist in Form eines im wesentlichen rechteckigen Behältnisses ausgebildet, dessen Boden 2 sich an im wesentlichen vertikale Seitenwände 3 anschließt und in seinem inneren Bereich sich zur Behältermitte kontinuierlich erhöhende Wölbung 4 aufweist. Die vom Boden 2 sich erstreckenden Seitenwände verfügen beispielsweise über eine Seitenhöhe von etwa 40 bis etwa 60 mm. Die Wölbung 4 des Behälterbodens 2 ist auch an ihrem höchsten Punkt 5 derart von der durch einen umlaufenden Seitenrand 6 aufgespannten Fläche entfernt, daß eine ausreichende Beschickung mit Lebensmitteln auch in diesem Bereich möglich ist. Mit Hilfe des umlaufenden Randes 6 gelingt beispielsweise ein Längs- bzw. Quereinschub des Behälters 1 in Einschubschienen innerhalb eines nicht gezeigten Garraums eines Ofens, in dem zur Garung Heißluft zirkuliert werden kann.

Figur 2 ist eine Draufsicht auf einen Behälter 1' in Anlehnung an Figur 1 zu entnehmen. Zusätzlich zu der Wölbung 4' sind auf der Bodenfläche 2' sechs parallel beabstandete Bodenwellen 7 ausgeformt. Die Bodenwellen 7 führen zu einer erheblich Vergrößerung der Garoberfläche und verhindern darüber hinaus ein großflächiges Aufliegen eines Garguts auf einer Unterlage. Insbesondere auch mit Hilfe der Bodenwellen 7 werden Luftwirbel am Behälterboden 2 erzeugt, was zu einer verbesserten Luftzirkulation und damit auch zu einem befriedigendem Garerfolg führt.

Mit den gezeigten Ausführungsformen eines erfindungsgemäßen Behälters wird eine gleichmäßige Fertiggarung bzw. Bräunung unter Vermeidung eines "Brat-Effekts" sowie eine Ansammlung einer übermäßigen Menge an Frittierfett zwischen den Lebensmitteln innerhalb des Behälters sichergestellt.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1, 1': Behälter
- 2, 2': Boden
- 3: Seitenwand
- 4, 4': Wölbung
- 5: höchster Punkt der Wölbung
- 6: umlaufender Rand
- 7: Bodenwelle

## Patentansprüche

1. Behälter zur Aufnahme von, insbesondere vorpräpariertem, Gargut, das in einem mit zirkulierender Heißluft und/oder Dampf beaufschlagbaren Garraum zu garen, insbesondere fertig zu garen, ist, mit einem oberen im wesentlichen umlaufenden Rand (6), einem gegenüber diesem Rand (6) abgesenkten Boden (2, 2') und Seitenwänden (3),
**dadurch gekennzeichnet, daß**
der Boden (2, 2') mindestens eine sich zur Behältermitte kontinuierlich erhöhende Wölbung (4, 4') enthält, und
der abgesenkte Bereich zumindest eine sich über die Breite des abgesenkten Bereichs erstreckende Bodenwelle (7) aufweist.

2. Behälter nach Anspruch 1, **dadurch gekennzeichnet, daß**
die Wölbung (4, 4') im Querschnitt, insbesondere in Längs- und/oder Querausdehnung des Behälters (1, 1'), die Form eines Kreis- oder Ellipsenbogenabschnitts oder eines stumpfen Winkels einnimmt.

3. Behälter nach Anspruch 1 oder 2, **dadurch gekennzeichnet, daß**
die Wölbung (4, 4') die Form eines Kugelsegments, eines Segments, eines abgeflachten Kegels oder einer abgeflachten Pyramide aufweist und insbesondere eine konvexe Form einnimmt.

4. Behälter nach einem der vorangehenden Ansprüche, **dadurch gekennzeichnet, daß** eine Vielzahl von Bodenwellen (7) vorliegen, wobei die Bodenwellen (7) beabstandet, insbesondere im wesentlichen parallel beabstandet, angeordnet sind.

5. Behälter nach einem der vorangehenden Ansprüche, **dadurch gekennzeichnet, daß** dieser im wesentlichen ein dreidimensionales Drahtgeflecht, insbesondere zum Formen des Bodens (2, 2') und/oder der Seitenwände (3) aufweist.

6. Behälter nach einem der vorangehenden Ansprüche, **dadurch gekennzeichnet, daß** der Behälter (1, 1') in Form eines nach oben offenen Einschubs mit einem oberen, umlaufenden Rand (6), für einen Längs- und/oder Quereinschub in Einschubschienen, wie Schienen eines Einhängegestells an Garraumwänden oder dergleichen ausgebildet ist.

7. Behälter nach einem der vorangehenden Ansprüche, **gekennzeichnet durch** mindestens einen Haltegriff an dem Behälter, der vorzugsweise form- und/oder kraftschlüssig an den Behälter lösbar anbringbar ist.

## Claims

1. Container for holding, in particular pre-prepared, food which is to be cooked, in particular completely cooked, in a cooking chamber which can be supplied with circulating hot air and/or steam, having an upper, essentially circumferential edge (6), a base (2, 2') which is lowered in comparison to this edge (6), and side walls (3),
**characterized in that**
the base (2, 2') comprises at least one curvature (4, 4') which increases continuously towards the middle of the container, and
the lowered region has at least one base corrugation (7) which extends over the width of the lowered region.

2. Container according to Claim 1, **characterized in that**
the cross section of the curvature (4, 4'), particularly in the longitudinal and/or lateral extent of the container (1, 1'), assumes the form of a section of an arc of a circle or an ellipse, or of an obtuse angle.

3. Container according to Claim 1 or 2, **characterized in that**
the curvature (4, 4') has the form of a ball segment, a segment, a flattened cone or a flattened pyramid, and in particular assumes a convex form.

4. Container according to one of the preceding claims, **characterized in that** there are a multiplicity of base corrugations (7) which are arranged such that they are spaced apart, in particular spaced apart substantially parallel to each other.

5. Container according to one of the preceding claims, **characterized in that** the said container essentially has a. three-dimensional wire mesh, in particular for forming the base (2, 2') and/or the side walls (3).

6. Container according to one of the preceding claims, **characterized in that** the container (1, 1') in the form of an insert which is open at the top and has an upper circumferential edge (6) is designed for longitudinal and/or lateral insertion into insert rails, such as rails in a suspended frame on cooking chamber walls or the like.

7. Container according to one of the preceding claims, **characterized by** at least one handle on the container, it preferably being possible to releasably attach this handle to the container in a positive and/or non-positive manner.

## Revendications

1. Contenant destiné à recevoir un produit à cuire, en particulier ayant fait l'objet d'une préparation préliminaire, le produit à cuire devant l'être dans une enceinte de cuisson sollicitée par une circulation d'air chaud et/ou de vapeur, en particulier devant faire l'objet d'une cuisson parachevée, avec un bord (6) supérieur sensiblement de pourtour, un fond (2,2') abaissé par rapport à ce bord (6) et des parois latérales (3),
**caractérisé en ce que**
le fond (2,2') contient au moins un bombement (4,4') allant en s'élevant de façon continue, en allant en direction du centre du contenant, et
la zone, abaissée, présente au moins une onde de fond (7) s'étendant sur la largeur de la zone abaissée.

2. Contenant selon la revendication 1, **caractérisé en ce que** le bombement (4,4'), observé en vue en coupe transversale, en particulier dans la direction longitudinale et/ou transversale du contenant (1,1'), prend la forme d'un tronçon d'arc de cercle ou d'ellipse, ou d'un angle obtus.

3. Contenant selon la revendication 1 ou 2, **caractérisé en ce que** le bombement (4,4') présente la forme d'un segment de sphère, d'un segment d'une sphère aplatie, ou d'une pyramide aplatie et, en particulier, prend une forme convexe.

4. Contenant selon l'une des revendications précédentes, **caractérisé en ce qu'**une pluralité d'ondulations de fond (7) sont prévues, les ondulations de fond (7) étant disposées à distance les unes des autres, en particulier à distance et sensiblement parallèlement.

5. Contenant selon l'une des revendications précédentes, **caractérisé en ce que** celui-ci présente une tresse en fil, sensiblement tridimensionnelle, en particulier pour former le fond (2,2') et/ou les parois latérales.

6. Contenant selon l'une des revendications précédentes, **caractérisé en ce que** le contenant (1,1') est conformé en tiroirs ouverts vers le haut, comprenant un bord supérieur (6) de pourtour, pour une insertion longitudinale et/ou transversale dans les glissières d'insertion, telles que des glissières d'un bâti d'accrochage sur des parois d'enceinte de cuisson ou analogues.

7. Contenant selon l'une des revendications principales, **caractérisé par** au moins une poignée de maintien sur le contenant, susceptibles d'être montées de façon désolidarisable sur le contenant, de préférence par une liaison à ajustement de forme et/ou à interaction de forces.
